# EUROPEAN PATENT SPECIFICATION

(11) **EP 3 066 575 B1**
(45) Date of publication and mention of the grant of the patent: **24.06.2020**
(21) Application number: 14860209.7
(22) Date of filing: 06.11.2014
(51) Int. Cl.: H04L 12/54, H04L 29/06, H04L 12/26, H04L 29/12

(54) **SERVER NETWORK ADDRESS SELECTION BASED ON NETWORK CHARACTERISTICS OF SERVICE PROVIDERS**
SERVERNETZWERK-ADRESSENAUSWAHL AUF BASIS VON NETZWERKEIGENSCHAFTEN VON DIENSTANBIETERN
SÉLECTION D'ADRESSES DE RÉSEAU DE SERVEUR BASÉE SUR DES CARACTÉRISTIQUES DE RÉSEAU DE FOURNISSEURS DE SERVICES

(30) Priority: 06.11.2013 US 201361900513 P
(43) Date of publication of application: 14.09.2016
(73) Proprietor: Fastly Inc., San Francisco, California 94107 (US)
(72) Inventor: BERGMAN, Artur, San Francisco, California 94105 (US)
(74) Representative: HGF Europe LLP
(86) International application number: PCT/US2014/064237
(87) International publication number: WO 2015/069834

(56) References cited:
- US-A1- 2009 248 786
- US-A1- 2010 125 675
- US-A1- 2011 173 339
- US-A1- 2011 225 284
- US-A1- 2012 117 240
- US-A1- 2012 254 421
- US-A1- 2013 018 978
- US-A1- 2013 060 893
- US-B1- 7 653 689
- US-B1- 7 716 367

## Description

### RELATED APPLICATIONS

This application hereby claims the benefit of and priority to U.S. Provisional Patent Application 61/900,513, titled "SERVER NETWORK ADDRESS SELECTION BASED ON NETWORK CHARACTERISTICS OF SERVICE PROVIDERS," filed November 06, 2013.

### TECHNICAL FIELD

Aspects of the disclosure are related to the field of packet communication networks, and in particular, delivery of content over packet communication networks.

### TECHNICAL BACKGROUND

Network-provided content, such as Internet web pages or media content such as video, pictures, music, and the like, are typically served to end users via networked computer systems. End user requests for the network content are processed and the content is responsively provided over various network links. A request for network content is typically handled by a network content server which may respond by retrieving static content from file storage. Alternatively a network content server may generate content on a per-request basis. Network content may be identified according to standard schemes such as Internet protocol (IP) addresses and uniform resource locators (URL). Content may be transferred according to standard delivery protocols such as file transfer protocol (FTP) and hypertext transport protocol (HTTP). Although there is no requirement that network content must structurally conform to a particular format, content usually has a standard encoding such as hypertext markup language (HTML), extensible markup language (XML), JavaScript object notation (JSON), or a common graphics format such as portable network graphics (PNG).

The Internet and other large networks have complicated topologies with redundant routes between endpoints, such as between an end user and a network content server. When a network content server communicates over different communication service providers, as with Internet Service Providers (ISPs), the various ISPs and other packet networks over which end user content requests and content delivery are handled can add bottleneck and latency issues. This can be aggravated by a large network that assumes responsibility for routing, such that a content provider typically has little or no control over how content is routed. As a consequence route optimization or emergency route substitution may be unachievable by a content provider given traditional strategies of network content delivery.

In US 2011/0173339 network service access method is mentioned wherein such a method comprises: forwarding the domain name resolution requests to a local domain name server of each Internet service provider providing services through access link corresponding with the Internet service provider; receiving Internet Protocol address on the domain name resolution requests which the local domain name server of each Internet service provider returned from the corresponding access link; selecting the Internet Protocol address according to line state of the access link of each Internet service provider providing services and returning the selected Internet Protocol address to the user equipments; and visiting network services by the access link of the Internet service provider returning the selected Internet Protocol address.

US 2009/0248786 A1 discloses a system and a method for management and processing of resource requests. A content delivery network service provider receives a DNS query from a client computing device. The DNS query corresponds to a requested resource from the client computing device. The content delivery network service provider associates the client computing device with a cluster of other client computing devices. Based on routing information for the cluster, the content delivery network service provider routes the DNS query. The process can further include monitoring performance data associated with the delivery of the requested resource and updating the routing information for the cluster based on the performance data for use in processing subsequent requests from client computing devices in the cluster.

Further US 2010/0125675 A1 discloses a system, method, and computer-readable medium for updating request routing information associated with client location information. A content delivery network service provider receives a DNS query from a client computing device. The DNS query corresponds to a resource identifier for requested content from the client computing device. The content delivery network service provider obtains a query IP address corresponding to the client computing device. Based on routing information associated with the query IP address, the content delivery network service provider routes the DNS query. The process further includes monitoring performance data associated with the transmission of the requested resource and updating routing information associated with the query IP address based on the performance data for use in processing subsequent requests form the client computing device.

### OVERVIEW

Systems, methods, and software that select network addresses of a network content server are provided herein. In one example, a method of network address selection that selects between different communication service providers according to network characteristics is presented. In some examples, the selection of network addresses is performed during a domain name translation process. Also in this example, one or more non-transitory computer readable media having stored thereon program instructions executable by one or more data storage systems of a network content server is presented. When executed by the one or more data storage systems, the program instructions can select network addresses according to network characteristics.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the views. While multiple embodiments are described in connection with these drawings, the disclosure is not limited to the embodiments disclosed herein. On the contrary, the intent is to cover all alternatives, modifications, and equivalents.
Figure 1 is a system diagram illustrating a communication system.
Figure 2 is a flow diagram illustrating a method of operating a control node.
Figure 3 is a system diagram illustrating a communication system.
Figure 4 is a sequence diagram illustrating an example method of operating a communication system.
Figure 5 is a block diagram illustrating an internal configuration of a control node.
Figure 6 is a block diagram illustrating an internal configuration of a network content server.

### DETAILED DESCRIPTION

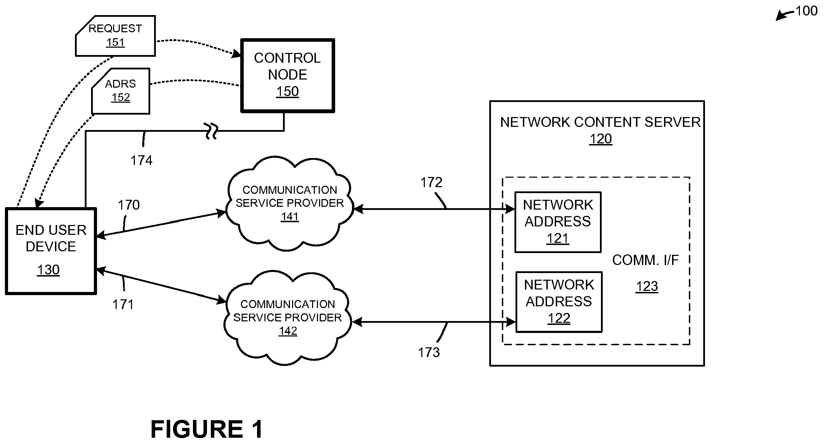

Network content, such as web page content, typically includes content such as text, hypertext markup language (HTML) pages, pictures, video, audio, code, scripts, or other content viewable by an end user in a browser or other application. Network content may be provided from static files or dynamically generated upon request. Network content includes example website content referenced in Figure 1, such as "www.alpha.com," among others.

As a first example of network content retrieval, Figure 1 is presented. Figure 1 is a system diagram illustrating communication system 100. Communication system 100 includes packet switched networks 105, control node 150, network content server 120, and at least one end user device 130.

End user device 130 is representative of an end user device which can request and receive network content, and any number of end user devices 130 can make content requests to the one or more network content servers, such as network content server 120. Network content server 120 communicates to end user device 130 over network links 170-173 that communicate with communication service providers 141 and 142.

To further illustrate Figure 1, a brief description of the operation of communication system 100 is included. In operation, control node 150 can perform domain name translation for end user devices, such as a domain name translation service (DNS). This domain name translation can translate a domain name or other alphanumeric network identifier for content into a network address. Control node 150 identifies network characteristics for end user device 130 and communication service providers 141 and 142. When end user device 130 attempts to retrieve content, end user device 130 can issue lookup request 151 to control node 150 over at least network link 174. Control node 150 processes the network characteristics and lookup request 151 to select a network address with which end user device 130 reaches content available on network content server 120 or some other network content server.

Communication interface 123 of network content server 120 communicates using at least network addresses 121 and 122. In this example, network content server 120 has multiple network addresses 121 and 122, control node 150 can select either network address 121 or network address 122 when processing lookup request 151 to select a network address for retrieving content from network content server 120. Although network addresses 121 and 122 can identify the same network content server 120, a content request destined for network address 121 is transferred over a different communication service provider than a content request destined for network address 122. Control node 150 identifies and processes at least the network characteristics of communications service providers 141 and 142 to select either of network addresses 121 and 122. This selection can depend on which communication service provider currently has more desirable network characteristics, among other considerations. After selecting a network address responsive to lookup request 151, control node 150 transfers 152 the selected network address for receipt by end user device 130.

After end user device 130 receives the selected network address, device 130 issues a content request using the network address. The content request is issued for delivery to network content server 120 over any of communication service providers 141-142 that is associated with the network address. For example, network address 121 is routed over communication service provider 141, while network address 122 is routed over communication service provider 142. Network content server 120 then receives the content request over the selected communication service provider associated with the selected network address. Responsive to the content request, network content server 120 delivers content requested by end user device 130. For example, if the content requested is associated with www.alpha.com, then network content server 120 responsively transfers the content for www.alpha.com for delivery to end user device 130. The content can be delivered over any of communication service providers 141 or 142.

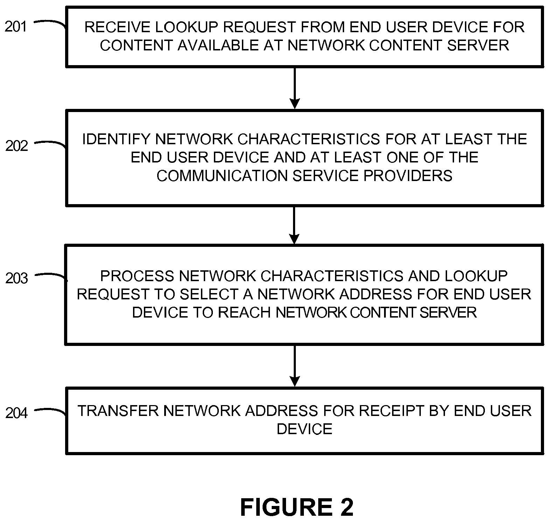

Figure 2 is a flow diagram illustrating a method of operating control node 150. Control node 150 receives (201) lookup request 151 from end user device 130 for content available at network content server 120. Lookup request 151 includes at least the domain name of a content site. Based on lookup request 151, control node 150 determines that the requested domain name is for a content site with content available at network content server 120. Control node 150 can be configured with information about the network topology of communication system 100, and control node 150 can be aware that network addresses 121-122 reach network content server 120. Control node 150 can also be aware that network addresses 121-122 routes through communication service providers 141-142, respectively.

Control node 150 identifies (202) network characteristics for at least end user device 130 and communication service providers 141-142. The network characteristics can include characteristics, such as performance data, collected previously or received by control node 150. The network characteristics can include real-time metrics of current network conditions, and can include past performance metrics. For example, network conditions can be such that communication service provider 141 can deliver content to end user device 130 with a higher throughput or lower latency than communication service provider 142. Such network conditions are reflected in the network characteristics that control node 150 identifies.

Control node 150 processes (203) the network characteristics and lookup request 151 to select a network address for end user device 130 to reach network content server 120. The selected network address corresponds to one of communication service providers 141-142. Control node 150 transfers (204) the selected network address for delivery to user device 130, as indicated by message 152. End user device 130 can then issue content requests to that network address. Any of end user device 130, communication service providers 141-142, and network content server 120 can report to control node 150 about network performance information. This network performance information can include performance information for the present content request or a response that occurs when end user device 130 uses the selected network address.

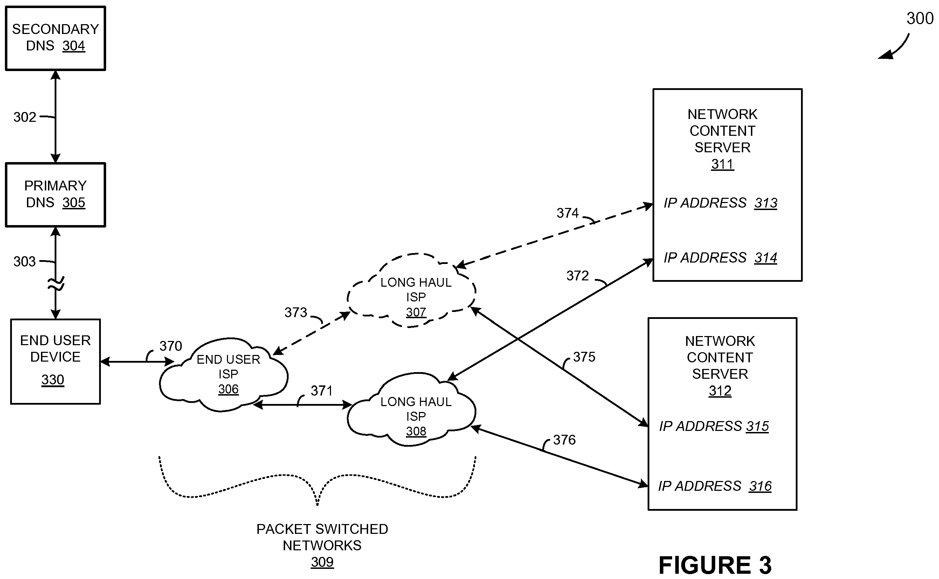

Figure 3 is a system diagram illustrating communication system 300. Communication system 300 includes domain name servers (DNS) 304-305, end user device 330, and packet switched networks 309. Elements of packet switched networks 309 are configured such that a content request from end user device 330 is routed through end user internet service provider (ISP) 306 and a selected one of long haul ISP 307 or 308. A DNS architecture in this example includes DNS 304 and 305. Primary DNS 305 receives lookup requests over network link 303 transferred by end user device 330. If the lookup request is for a domain name or network location at which network content resides, then primary DNS 305 delegates the lookup request by forwarding the request over network link 302 to secondary DNS 304.

In this example, the network addresses are Internet protocol (IP) addresses. Content that is available for retrieval from network content server 311 and network content server 312 is reachable by associated IP addresses 313-316. Secondary DNS 304 processes a lookup request received from primary DNS 305 along with at least network characteristics of end user device 330 and the three ISPs 306-308 when selecting an IP address. Since a content request passes through two ISPs, secondary DNS 304 can select an IP address according to the network characteristics of any pairing of ISPs, among other selections.

Content requests arrive at network content server 311 over either of link 374 or 372 depending on which long haul ISP 307 or 308 routes the selected IP address. When selecting IP addresses that are associated with network content server 311, secondary DNS 304 can process network or communication status data such as latency, throughput, outages, price schedules, and network performance issues with causes such as buffer saturation, packet window not tuned, page swap, disk wait, packet loss, bottleneck, and congestion. While processing secondary DNS 304 can consider performance constraints of network links 370-376, perhaps including latency measured with Internet control message protocol (ICMP) pings or with actual delivery time data for content-related traffic as measured by end user device 330, other end user devices not pictured in Figure 3, or network content server 311, among other monitoring systems or devices. End user device 330 properties can also be processed by secondary DNS 304. For example the IP address of an end user device can be associated with a range of IP addresses that are showing poor performance such as latency higher than a latency threshold. The latency discussed herein can include latency for a request for content issued to a selected network content server and the delivery of that content to an end user device.

Secondary DNS 304 can receive and process communication status data in real time to control dynamic routing decisions by selecting network addresses that are provided responsive to DNS lookup requests. For example, long haul ISPs 307 and 308 might usually share equally the traffic of content requests going to network content server 311. By repeatedly applying its IP-address selection criteria to the most recent communication status data, secondary DNS 304 can tune the routing of content to better fit current conditions.

In this example, end user device 330 attempts to retrieve content that is stored at network content server 311. Secondary DNS 304 selects IP address 313 and tells end user device 330 to use IP address 313 to reach network content server 311. Content requests directed to IP address 313 go through long haul ISP 307 in this example. If long haul ISP 307 begins to show signs of operational stress, including failures to meet quality thresholds, secondary DNS 304 can discontinue telling end user devices that network content server 311 is reachable at IP address 313 and instead instruct end user devices to reach content at an alternate IP address. Figure 3 indicates the degraded service with dashed lines for long haul ISP 307, network links 373 and 374, and IP address 313. According to network characteristics, secondary DNS 304 can respond to subsequent lookup requests by selecting other network content server addresses than IP address 313, such as IP addresses 314-316. By selecting among IP addresses and associated routing dynamically, selection of IP address by secondary DNS 304 can shape traffic in real time according to performance, cost, and quality constraints, among other considerations.

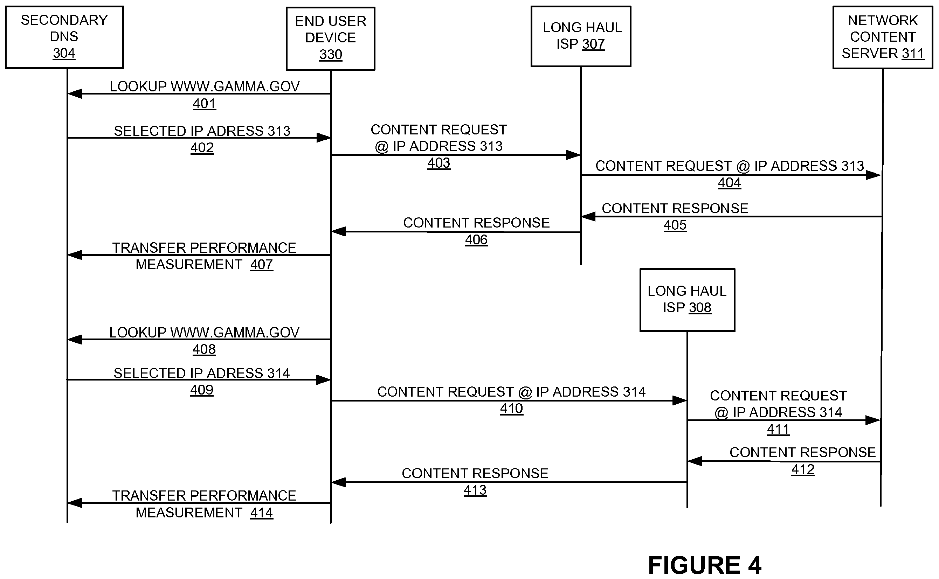

Figure 4 is a sequence diagram illustrating a method of operating Figure 3. It should be understood that he operations of Figure 4 can also be applied to similar elements of Figure 1. Elements shown in Figure 4 operate to select and use network addresses in communication system 300. Communication system 100 of Figure 1 can also perform the behavior shown in Figure 4, although variations are possible.

During operation, end user device 330 attempts to retrieve content, such as in a browser application or other end user application. The content can be presented to end user device 330 using a domain name, such as www.alpha.com, and user device 330 first must translate the domain name into a network address, such as an IP address, along with directory or path information. To translate the domain name, end user device 330 issues a domain name lookup request, which in this example is received by primary DNS 305. Although link 303 is shown in Figure 3, it should be understood that the domain name lookup request can be transported over any number of network links or packet networks, including the Internet.

End use device 330 attempts to request content by first transferring (401) a domain name lookup request of a site domain for delivery to DNS 305. DNS 305 determines that the domain name requested is associated with a secondary DNS system, and DNS 305 forwards the lookup request to secondary DNS 304. According to the network characteristics of end user device 330 and the various communication service providers available, secondary DNS 304 determines which communication service provider is currently desirable and selects an IP address that will reach network content server 311 through that communication service provider. In a first example, long haul ISP 307 currently has network characteristics that indicate higher performance than the network characteristics of long haul ISP 308. Because of these network characteristics, secondary DNS 304 selects an IP address that involves long haul ISP 307. To reach content on network content server 311 through long haul ISP 307, IP address 313 is selected. Secondary DNS 304 transfers (402) IP address 313 for delivery to end user device 330.

When end user device 330 requests (403) the network content, end user device 330 does so using selected IP address 313 to ensure that the content request reaches network content server 311 through (404) long haul ISP 307. Network content server 311 receives the content request at IP address 313, processes the content request, and replies (405, 406) with the desired network content. Any network performance measurements made by end user device 330 for this retrieval of network content are transferred (407) back to secondary DNS 304. Network content server 311 can also report network performance measurements to secondary DNS 304. End user device 330 can reuse the IP address selected by secondary DNS 304 by issuing multiple content requests to that IP address. End user device 330 can subsequently make another domain name lookup request to obtain another selected IP address based on more recent network characteristics.

At a later time, long haul ISP 307 experiences performance degradation, and end user device 330 prepares to retrieve more network content. Secondary DNS 304 receives (408) another lookup request from end user device 330. According to network performance characteristics, secondary DNS decides to route content retrieval through long haul ISP 308 instead of long haul ISP 309. As such secondary DNS 304 selects IP address 314 of the same network content server 311. Secondary DNS 304 transfers (409) the selected IP address 314 to end user device 330. End user device 330 uses selected IP address 314 to request and receive network content through long haul ISP 308 (410-413). Again, end user device 330 can report (414) performance measurements to secondary DNS 304. Network content server 311 can also report network performance measurements to secondary DNS 304.

The performance information or performance characteristics can be identified or determined in different ways. In some examples, secondary DNS 304 receives performance information transferred by various network devices, such as network content servers and end user devices that indicate performance of content requests and content delivery responsive to those content requests. In further examples, dedicated monitoring equipment is employed, such as management systems or monitoring systems, that monitor performance of various communication service providers associated with the various network content servers. As current performance conditions change, then different network addresses can be provided responsive to domain name lookup requests to route traffic over different communication service providers.

In yet further examples, performance associated with content requests of other end user devices is monitored and processed to make network address selections. For example, a second end user device can issue a content request to a network address, and performance of the request and subsequent content delivery via that network address and communication service provider can be monitored. The second user device can provide this performance information to DNS 304, or the network content server involved in delivery the requested content can deliver the performance information to DNS 304. Instead of DNS 304 receiving the performance information, a different monitoring system can receive this performance information and provide it to DNS 304 periodically.

As discussed herein, the performance information can include latency information and transfer throughput information. The latency information can be related to a latency of a content request being fulfilled and having content transferred to an end user. The latency information can also relate to the delay between an end user device issuing a content request and that content request getting accepted by a network content server. The throughput information can relate to data transfer throughput, bandwidth, or other data transfer characteristics related to a volume of content transferred to one or more end user devices. For example, a specific communication service provider can be monitored by a network content server or other monitoring system to determine a volume of content that is presently being handled by the communication service provider. When the volume of content falls below a threshold level, then another communication service provider can be selected to handle content requests or content delivery.

Address ranges of various end user devices can be monitored as well. Network performance associated with a range of network addresses that correspond to end user devices can be monitored. When a particular address range, such as that associated with a particular ISP or long-haul provider, shows signs of poor performance, then that particular ISP or long-haul provider can be avoided. When a subsequent domain name lookup request is received from an end user device that falls within that address range is received, an alternate network address can be returned which routes any associated content requests over a different ISP or long-haul provider. For example, the second end user device mentioned above can be associated with a particular end user address range that is currently experiencing degraded performance. A subsequent domain name lookup request from another end user device can provide an alternate network address for a network content server than that provided prior to the degraded performance.

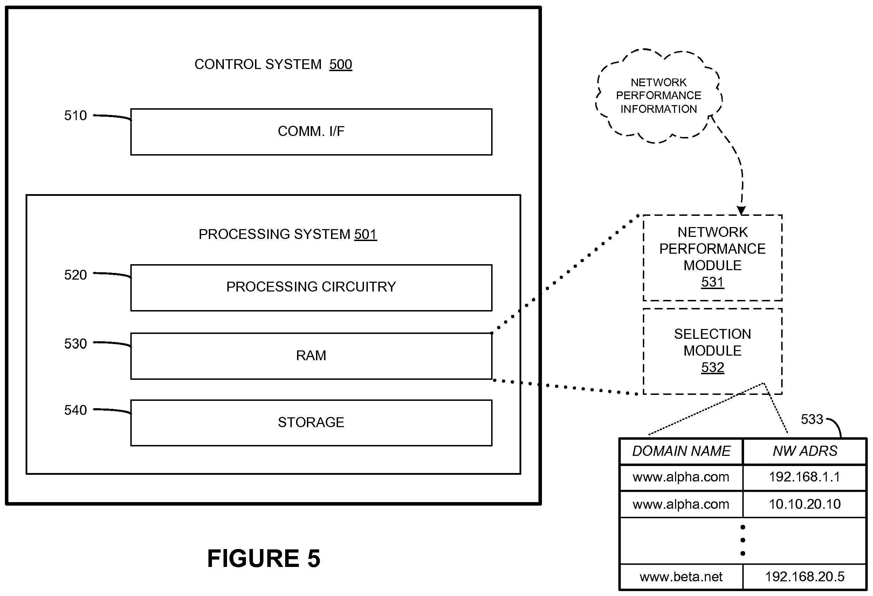

Figure 5 illustrates the internal configuration of control node 500. Control node 500 can be an implementation of control node 150 in Figure 1 and secondary DNS 304 in Figure 3, although control node 150 and secondary DNS 304 can have different internal configurations. Control node 500 comprises communication interface 510, and processing system 501. Processing system 501 includes processing circuitry 520, RAM 530, and storage 540. Processing system 501 is linked to communication interface 510. Processing system 501 includes processing circuitry 520 which is connected to RAM 530 that stores operating software. Control node 500 can include other components such as an enclosure that are not shown for clarity.

Processing system 501 can be implemented within a single processing device but can also be distributed across multiple processing devices or sub-systems that cooperate in executing program instructions. Examples of processing system 501 include general purpose central processing units, microprocessors, application specific processors, and logic devices, as well as any other type of processing device. In some examples, processing system 501 includes physically distributed processing devices, such as cloud computing systems.

Communication interface 510 includes one or more network interfaces for communicating over communication networks, such as packet networks, the Internet, and the like. The network interfaces can include one or more local or wide area network communication interfaces which can communicate over Ethernet or Internet protocol (IP) links. Examples of communication interface 510 include network interface card equipment, transceivers, modems, and other communication circuitry. In some examples, communication interface 510 receives domain name lookup requests issued by end user devices and transfers network addresses associated with content delivery nodes for receipt by end user devices responsive to domain name lookup requests.

Software stored on or in RAM 530 or storage 540 can comprise computer program instructions, firmware, or some other form of machine-readable processing instructions having processes that when executed by processing system 501 direct control system 500 to receive domain name lookup requests from end user devices for network content, identify network characteristics of end user devices and communication service providers, process network characteristics and domain name lookup requests to select network addresses corresponding to communication service providers for end user devices to reach network content servers, and transfer network addresses to end user devices, among other operations. The software of control system 500 can also include user software applications. The software can be implemented as a single application or as multiple applications. In general, the software can, when loaded into processing system 501 and executed, transform processing system 501 from a general-purpose device into a special-purpose device customized as described herein.

In one example, RAM 530 or storage 540 stores executable instructions for modules 531-532 as shown, although other implementations can use different modules. Network performance module 531 identifies network characteristics of at least end user devices and communication service providers. Network content server selection module 532 processes the network characteristics and domain name lookup requests to select network addresses of network content servers. Selection module 532 can include various data structures, such as databases or lookup tables, that relate network addresses for network content servers to domain names or other information. For example, lookup table 533 is included in Figure 5. Selection module 532 can reference lookup table 533 to determine which network addresses relate to which domain names. As seen in lookup table 533, two network addresses are indicated for www.alpha.com, namely IP addresses 192.168.1.1 and 10.10.20.10. Selection module 532 can select among these IP addresses based on at least the network performance information and characteristics discussed herein.

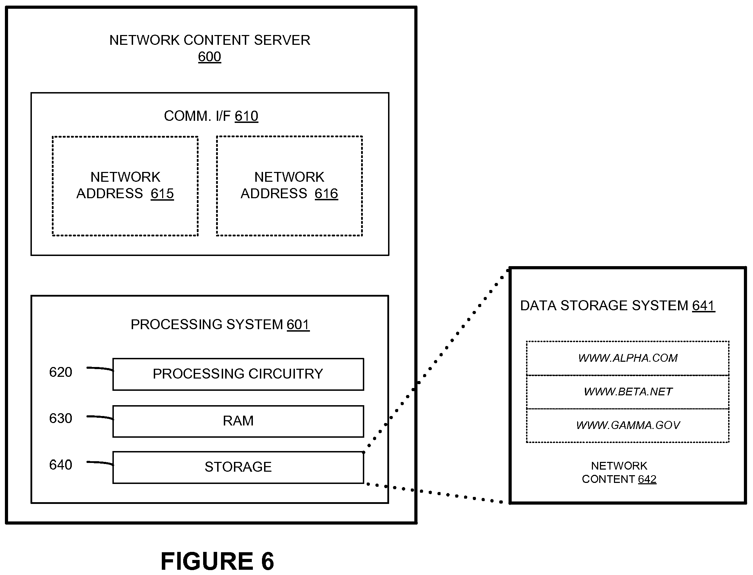

Figure 6 illustrates the internal configuration of network content server 600. Network content server 600 can be an implementation of network content server 120 in Figure 1, or network content servers 311 and 312 in Figure 3. Network content server 120 and network content servers 311 and 312 can have different internal configurations. Network content server 600 includes communication interface 610, and processing system 601. Processing system 601 includes processing circuitry 620, RAM 630, and storage 640. In operation, processing system 601 is operatively linked to communication interface 610, RAM 630, and storage 640 by processing circuitry 620. Processing system 601 is capable of executing software stored in RAM 630 or storage 640. When executing the software, processing system 601 drives network content server 600 to operate as described herein. Network content server 600 can also include other elements, such as user interfaces, computer systems, databases, distributed storage and processing elements, and the like.

Processing system 601 can be implemented within a single processing device but can also be distributed across multiple processing devices or sub-systems that cooperate in executing program instructions. Examples of processing system 601 include general purpose central processing units, microprocessors, application specific processors, and logic devices, as well as any other type of processing device. In some examples, processing system 601 includes physically distributed processing devices, such as cloud computing systems.

Communication interface 610 includes one or more network interfaces for communicating over communication networks, such as packet networks, the Internet, and the like. The network interfaces can include one or more local or wide area network communication interfaces which can communicate over Ethernet or Internet protocol (IP) links. Communication interface 610 can include network interfaces configured to communicate using one or more network addresses, which can be associated with different network links to different communication service providers. Examples of communication interface 610 include network interface card equipment, transceivers, modems, and other communication circuitry. Communication interface 610 is associated with at least network addresses 615-616 for sending and receiving data over a network. Network addresses 615-616 can be IP addresses.

RAM 630 and storage 640 together can comprise a data storage system, such as in data storage system 641 for storage of network content 642, although variations are possible. RAM 630 and storage 640 can each comprise any non-transitory storage media readable by processing system 601 and capable of storing software. RAM 630 can include volatile and nonvolatile, removable and non-removable media implemented in any method or technology for storage of information, such as computer readable instructions, data structures, program modules, or other data. Storage 640 can include non-volatile storage media, such as solid state storage media, flash memory, or solid state storage system. RAM 630 and storage 640 can each be implemented as a single storage device but can also be implemented across multiple storage devices or sub-systems. RAM 630 and storage 640 can each comprise additional elements, such as controllers, capable of communicating with processing system 601.

Software stored on or in RAM 630 or storage 640 can comprise computer program instructions, firmware, or some other form of machine-readable processing instructions having processes that when executed by processing system 601 direct network content server 600 to operate as described herein. For example, software drives network content server 600 to receive requests for content, determine if the content is stored in network content server 600, retrieve content from origin servers, transfer content to end user devices, and manage data storage systems for handling and storing the content, among other operations. The software can also include user software applications. The software can be implemented as a single application or as multiple applications. In general, the software can, when loaded into processing system 601 and executed, transform processing system 601 from a general-purpose device into a special-purpose device customized as described herein.

Referring back to Figure 1, end user device 130 can be a user device, subscriber equipment, customer equipment, access terminal, smartphone, personal digital assistant (PDA), computer, tablet computing device, e-book, Internet appliance, media player, game console, or some other user communication apparatus, including combinations thereof. Network content server 120, communication service providers 141-142, and control node 150 can each include communication interfaces, network interfaces, processing systems, computer systems, microprocessors, storage systems, storage media, or some other processing devices or software systems, and can be distributed among multiple devices. Examples of network content server 120, communication service providers 141-142, and control node 150 can each include software such as an operating system, logs, databases, utilities, drivers, content management software, networking software, and other software stored on a computer-readable medium.

Communication links 170-174 each use metal, glass, optical, air, space, or some other material as the transport media. Communication links 170-174 can each use various communication protocols, such as Time Division Multiplex (TDM), asynchronous transfer mode (ATM), Internet Protocol (IP), Ethernet, synchronous optical networking (SONET), hybrid fiber-coax (HFC), circuit-switched, communication signaling, wireless communications, or some other communication format, including combinations, improvements, or variations thereof. Communication links 170-174 can each be a direct link or can include intermediate networks, systems, or devices, and can include a logical network link transported over multiple physical links. Although one main link for each of links 170-174 is shown in Figure 1, it should be understood that links 170-174 are merely illustrative to show communication modes or access pathways. In other examples, further links can be shown, with portions of the further links shared and used for different communication sessions or different content types, among other configurations. Communication links 170-174 can each include many different signals sharing the same associated link, as represented by the associated lines in Figure 1, comprising resource blocks, access channels, paging channels, notification channels, forward links, reverse links, user communications, communication sessions, overhead communications, carrier frequencies, other channels, timeslots, spreading codes, transportation ports, logical transportation links, network sockets, packets, or communication directions.

The invention is not limited to the specific embodiments described above, but only by the appended claims.

## Claims

1. A control node (150) for selecting a network address for an end user device (130) to reach a network content server (120), wherein the network content server is addressable by a plurality of end user devices via a plurality of network addresses each associated with a unique communication service provider of a plurality of communication service providers, the control node comprising:
a communication interface (510) configured to receive a domain name lookup request transferred by a first end user device and another domain name lookup request transferred by a second end user device among the plurality of end user devices , each of said first and second end user devices being associated to a different range of addresses, each corresponding to a different communication service provider, the communication interface being further configured to receive performance data of network communications between the network content server and each of the first and second end user devices through each of the corresponding communication service providers;
a processing system (501) configured to identify network characteristics related to the first end user device, the second end user device and the corresponding communication service providers, wherein the network characteristics are derived at least from the received performance data of network communications; the processing system being further configured to process the network characteristics and the domain name lookup requests to identify, for each of said domain name lookup requests, based on determining which communication service provider has more desirable network characteristics, a selected network address from the plurality of network addresses for the network content server that corresponds to at least a domain name indicated by eachdomain name lookup request;
the communication interface being further configured to transfer the selected network address for delivery to each of said first and second end user devices, so that each of said first and second end user devices issues a further content request using the selected network address for routing each said further content request to the network content server over the communication service provider corresponding to the selected network address.

2. The control node of claim 1, comprising:
the communication interface configured to receive the performance data transferred by at least one of the network content server and the second end user device.

3. The control node of claim2, wherein the performance data comprises at least one of latency information and transfer throughput information.

4. The control node of claim 1, comprising:
the processing system configured to identify at least one of an Internet Service Provider of each of said first and second end user devices and a network address range comprising a network address of each of said first and second end user devices to identify the network characteristics for each of said first and second end user devices.

5. A method of operating a control node (150) to select a network address for an end user device (130) to reach a network content server (120), wherein the network content server is addressable by a plurality of end user devices via a plurality of network addresses, each associated with a unique communication service provider of a plurality of communication service providers, the method comprising:
receiving, by a communication interface at the control node, a domain name lookup request transferred by a first end user device and another domain name lookup request transferred by a second end user device among the plurality of end user devices, each of said first and second end user devices being associated to a different range of addresses, each corresponding to a different communication service provider;
receiving, by the communication interface, performance data of network communications between the network content server and each of the first and second end user devices through each of the corresponding communication service providers;
identifying, by a processing system at the control node, network characteristics related to the first end user device, the second end user device and the corresponding communication service providers, wherein the network characteristics are derived at least from the received performance data of network communications ;
processing, by the processing system, the network characteristics and the domain name lookup requests to identify, for each of said domain name lookup requests, based on determining which communication service provider has more desirable network characteristics, a selected network address from the plurality of network addresses for the network content server that corresponds to at least a domain name indicated by each domain name lookup request;
transferring, by the communication interface, the selected network address for delivery to each of said first and second end user devices, so that each of said first and second end user devices issues a further content request using the selected network address for routing each said further content request to the network content server over the communication service provider corresponding to the selected network address.

6. The method of claim 5, wherein receiving the performance data comprises receiving the performance data transferred by at least one of the network content server and the second end user device.

7. The method of claim 6, wherein the performance data comprises at least one of latency information and transfer throughput information.

8. The method of claim 5, wherein identifying the network characteristics comprises identifying at least one of an Internet Service Provider of each of said first and second end user devices and a network address range comprising a network address of each of said first and second end user devices to identify the network characteristics for each of the first and second end user devices.

## Patentansprüche

1. Steuerknoten (150) zum Auswählen einer Netzwerkadresse für eine Endbenutzervorrichtung (130), um einen Netzwerkinhaltsserver (120) zu erreichen, wobei der Netzwerkinhaltsserver durch eine Vielzahl von Endbenutzervorrichtungen über eine Vielzahl von Netzwerkadressen adressierbar ist, wovon jede mit einem eindeutigen Kommunikationsdienstanbieter einer Vielzahl von Kommunikationsdienstanbietern assoziiert ist, der Steuerknoten umfassend:
eine Kommunikationsschnittstelle (510), die konfiguriert ist, um eine Domänennamen-Suchanforderung, die von einer ersten Endbenutzervorrichtung übertragen wird, und eine weitere Domänennamen-Suchanforderung, die von einer zweiten Endbenutzervorrichtung aus der Vielzahl von Endbenutzervorrichtungen übertragen wird, zu empfangen, wobei jede der ersten und der zweiten Endbenutzervorrichtung mit einem verschiedenen Adressenbereich assoziiert ist, der jeweils einem verschiedenen Kommunikationsdienstanbieter entspricht, wobei die Kommunikationsschnittstelle ferner konfiguriert ist, um sie Leistungsdaten von Netzkommunikationen zwischen dem Netzwerkinhaltsserver und jeder von der ersten und der zweiten Endbenutzervorrichtung über jeden der entsprechenden Kommunikationsdienstanbieter zu empfangen;
ein Verarbeitungssystem (501), das konfiguriert ist, um Netzwerkeigenschaften zu identifizieren, die sich auf die erste Endbenutzervorrichtung, die zweite Endbenutzervorrichtung und die entsprechenden Kommunikationsdienstanbieter beziehen, wobei die Netzwerkeigenschaften mindestens von den empfangenen Leistungsdaten von Netzwerkkommunikationen abgeleitet sind; wobei das Verarbeitungssystem ferner konfiguriert ist, um die Netzwerkeigenschaften und die Domänennamen-Suchanforderungen zu verarbeiten, um für jede der Domänennamen-Suchanforderungen basierend auf einem Bestimmen, welcher Kommunikationsdienstanbieter wünschenswertere Netzwerkeigenschaften aufweist, eine ausgewählte Netzwerkadresse aus der Vielzahl von Netzwerkadressen für den Netzwerkinhaltsserver zu identifizieren, die mindestens einem Domänennamen entspricht, der durch jede Domänennamen-Suchanforderung angegeben wird;
wobei die Kommunikationsschnittstelle ferner konfiguriert ist, um die ausgewählte Netzwerkadresse zur Zuführung an jede von der ersten und der zweiten Endbenutzervorrichtung zu übertragen, sodass jede von der ersten und zweiten Endbenutzervorrichtung unter Verwendung der ausgewählten Netzwerkadresse eine weitere Inhaltsanforderung zum Weiterleiten jeder weiteren Inhaltsanforderung über den Kommunikationsdienstanbieter entsprechend der ausgewählten Netzwerkadresse an den Netzwerkinhaltsserver ausgibt.

2. Steuerknoten nach Anspruch 1, umfassend: die Kommunikationsschnittstelle, die konfiguriert ist, um die Leistungsdaten zu empfangen, die von mindestens einem von dem Netzwerkinhaltsserver und der zweiten Endbenutzervorrichtung übertragen werden.

3. Steuerknoten nach Anspruch 2, wobei die Leistungsdaten mindestens eines von Latenzinformationen und Übertragungsdurchsatzinformationen umfassen.

4. Steuerknoten nach Anspruch 1, umfassend
wobei das Verarbeitungssystem konfiguriert ist, um mindestens eines von einem Internet-Dienstanbieter von jeder von der ersten und zweiten Endbenutzervorrichtung und einem Netzwerkadressbereich, umfassend eine Netzwerkadresse von jeder von der ersten und zweiten Endbenutzervorrichtung, zu identifizieren, um die Netzwerkeigenschaften für jede von der ersten und der zweiten Endbenutzervorrichtung zu identifizieren.

5. Verfahren zum Betreiben eines Steuerknotens (150) zum Auswählen einer Netzwerkadresse für eine Endbenutzervorrichtung (130), um einen Netzwerkinhaltsserver (120) zu erreichen, wobei der Netzwerkinhaltsserver durch eine Vielzahl von Endbenutzervorrichtungen über eine Vielzahl von Netzwerkadressen adressierbar ist, wovon jede mit einem eindeutigen Kommunikationsdienstanbieter einer Vielzahl von Kommunikationsdienstanbietern assoziiert ist, das Verfahren umfassend:
Empfangen, durch eine Kommunikationsschnittstelle an dem Steuerknoten, einer Domänennamen-Suchanforderung, die von einer ersten Endbenutzervorrichtung übertragen wird, und einer weiteren Domänennamen-Suchanforderung, die von einem zweiten Endbenutzervorrichtung übertragen wird, unter der Vielzahl von Endbenutzervorrichtungen, wobei jede von der ersten und der zweiten Endbenutzervorrichtung mit einem unterschiedlichen Adressenbereich assoziiert ist, der jeweils einem verschiedenen Kommunikationsdienstanbieter entspricht; Empfangen, durch die Kommunikationsschnittstelle, von Leistungsdaten der Netzwerkkommunikation zwischen dem Netzwerkinhaltsserver und jeder von der ersten und der zweiten Endbenutzervorrichtung über jeden von den entsprechenden Kommunikationsdienstanbietern;
Identifizieren, durch ein Verarbeitungssystem an dem Steuerknoten, von Netzwerkeigenschaften, die sich auf die erste Endbenutzervorrichtung, die zweite Endbenutzervorrichtung und die entsprechenden Kommunikationsdienstanbieter beziehen, wobei die Netzwerkeigenschaften mindestens von den empfangenen Leistungsdaten der Netzwerkkommunikationen abgeleitet sind;
Verarbeiten, durch das Verarbeitungssystem, der Netzwerkeigenschaften und der Domänennamen-Suchanforderungen, um für jede der Domänennamen-Suchanforderungen basierend auf einem Bestimmen, welcher Kommunikationsdienstanbieter wünschenswertere Netzwerkeigenschaften aufweist, eine ausgewählte Netzwerkadresse aus der Vielzahl von Netzwerkadressen für den Netzwerkinhaltsserver zu identifizieren, die mindestens einem Domänennamen entspricht, der durch jede Domänennamen-Suchanforderung angegeben wird;
Übertragen, durch die Kommunikationsschnittstelle, der ausgewählten Netzwerkadresse zur Zuführung an jede von der ersten und der zweiten Endbenutzervorrichtung, sodass jede von der ersten und zweiten Endbenutzervorrichtung unter Verwendung der ausgewählten Netzwerkadresse eine weitere Inhaltsanforderung zum Weiterleiten jeder weiteren Inhaltsanforderung über den Kommunikationsdienstanbieter entsprechend der ausgewählten Netzwerkadresse an den Netzwerkinhaltsserver ausgibt.

6. Verfahren nach Anspruch 5, wobei ein Empfangen der Leistungsdaten ein Empfangen der Leistungsdaten umfasst, die von mindestens einem von dem Netzwerkinhaltsserver und der zweiten Endbenutzervorrichtung übertragen werden.

7. Verfahren nach Anspruch 6, wobei die Leistungsdaten mindestens eines von Latenzinformationen und Übertragungsdurchsatzinformationen umfassen.

8. Verfahren nach Anspruch 5, wobei ein Identifizieren der Netzwerkeigenschaften ein Identifizieren mindestens eines von einem Internet-Dienstanbieter von jeder von der ersten und zweiten Endbenutzervorrichtung und einem Netzwerkadressbereich, umfassend eine Netzwerkadresse von jeder von der ersten und zweiten Endbenutzervorrichtung, umfasst, um die Netzwerkeigenschaften für jede von der ersten und der zweiten Endbenutzervorrichtung zu identifizieren.

## Revendications

1. Nœud de commande (150) destiné à sélectionner une adresse de réseau pour un dispositif d'utilisateur final (130) afin d'atteindre un serveur de contenu de réseau (120), ledit serveur de contenu de réseau étant adressable par une pluralité de dispositifs d'utilisateur final par l'intermédiaire d'une pluralité d'adresses de réseau chacune associées à un fournisseur de services de communication unique d'une pluralité de fournisseurs de services de communication, le nœud de commande comprenant :
une interface de communication (510) configurée pour recevoir une demande de consultation de nom de domaine transférée par un premier dispositif d'utilisateur final et une autre demande de consultation de nom de domaine transférée par un second dispositif d'utilisateur final parmi la pluralité de dispositifs d'utilisateur final, chacun desdits premier et second dispositifs d'utilisateur final étant associé à une plage d'adresses différentes, chacune correspondant à un fournisseur de services de communication différent, l'interface de communication étant en outre configurée pour recevoir des données de performance des communications de réseau entre le serveur de contenu de réseau et chacun des premier et second dispositifs d'utilisateur final par l'intermédiaire de chacun des fournisseurs de services de communication correspondants ;
un système de traitement (501) configuré pour identifier les caractéristiques de réseau liées au premier dispositif d'utilisateur final, au second dispositif d'utilisateur final et aux fournisseurs de services de communication correspondants, lesdites caractéristiques de réseau étant dérivées au moins des données de performance reçues des communications de réseau ; le système de traitement étant en outre configuré pour traiter les caractéristiques de réseau et les demandes de consultation de nom de domaine pour identifier, pour chacune desdites demandes de consultation de nom de domaine, sur la base de la détermination du fournisseur de services de communication qui possède les caractéristiques de réseau les plus souhaitables, une adresse de réseau sélectionnée parmi la pluralité d'adresses de réseau pour le serveur de contenu de réseau qui correspond à au moins un nom de domaine indiqué par chaque demande de consultation de nom de domaine ;
l'interface de communication étant en outre configurée pour transférer l'adresse de réseau sélectionnée pour la distribution à chacun desdits premier et second dispositifs d'utilisateur final, afin que chacun desdits premier et second dispositifs d'utilisateur final émette une demande de contenu supplémentaire à l'aide de l'adresse de réseau sélectionnée pour acheminer chacune desdites demandes de contenu supplémentaire au serveur de contenu de réseau par l'intermédiaire du fournisseur de services de communication correspondant à l'adresse de réseau sélectionnée.

2. Nœud de commande selon la revendication 1, comprenant : l'interface de communication configurée pour recevoir les données de performance transférées par au moins l'un du serveur de contenu de réseau et du second dispositif d'utilisateur final.

3. Nœud de commande selon la revendication 2, lesdites données de performances comprenant au moins l'une des informations de latence et des informations de débit de transfert.

4. Nœud de commande selon la revendication 1, comprenant :
le système de traitement configuré pour identifier au moins l'un d'un fournisseur de services Internet de chacun desdits premier et second dispositifs d'utilisateur final et une plage d'adresses de réseau comprenant une adresse de réseau de chacun desdits premier et second dispositifs d'utilisateur final pour identifier les caractéristiques de réseau pour chacun desdits premier et second dispositifs d'utilisateur final.

5. Procédé d'exploitation d'un nœud de commande (150) pour sélectionner une adresse de réseau pour un dispositif d'utilisateur final (130) afin d'atteindre un serveur de contenu de réseau (120), ledit serveur de contenu de réseau étant adressable par une pluralité de dispositifs d'utilisateur final par l'intermédiaire d'une pluralité d'adresses de réseau, chacune associée à un fournisseur de services de communication unique d'une pluralité de fournisseurs de services de communication, le procédé comprenant :
la réception, par une interface de communication au niveau du nœud de commande, d'une demande de consultation de nom de domaine transférée par un premier dispositif d'utilisateur final et une autre demande de consultation de nom de domaine transférée par un second dispositif d'utilisateur final parmi la pluralité de dispositifs d'utilisateur final, chacun desdits premier et second dispositifs d'utilisateur final étant associé à une plage d'adresses différente, correspondant chacune à un fournisseur de services de communication différent ; la réception, par l'interface de communication,
des données de performance des communications de réseau entre le serveur de contenu de réseau et chacun des premier et second dispositifs d'utilisateur final par l'intermédiaire de chacun des fournisseurs de services de communication correspondants ;
l'identification, par un système de traitement au niveau du nœud de commande, des caractéristiques de réseau liées au premier dispositif d'utilisateur final, au second dispositif d'utilisateur final et aux fournisseurs de services de communication correspondants, lesdites caractéristiques de réseau étant dérivées au moins des données de performance reçues des communications de réseau ;
le traitement, par le système de traitement, des caractéristiques de réseau et des demandes de consultation de nom de domaine pour identifier, pour chacune desdites demandes de consultation de nom de domaine, sur la base de la détermination du fournisseur de services de communication qui possède les caractéristiques de réseau les plus souhaitables, une adresse de réseau sélectionnée parmi la pluralité d'adresses de réseau pour le serveur de contenu de réseau qui correspond à au moins un nom de domaine indiqué par chaque demande de consultation de nom de domaine ;
le transfert, par l'interface de communication, de l'adresse de réseau sélectionnée en vue de la distribution à chacun desdits premier et second dispositifs d'utilisateurs final, afin que chacun desdits premier et second dispositifs d'utilisateur final émette une demande de contenu supplémentaire à l'aide de l'adresse de réseau sélectionnée pour acheminer chacune desdites demande de contenu supplémentaire au serveur de contenu de réseau par l'intermédiaire du fournisseur de services de communication correspondant à l'adresse de réseau sélectionnée.

6. Procédé selon la revendication 5, ladite réception des données de performance comprenant la réception des données de performance transférées par au moins l'un du serveur de contenu de réseau et du second dispositif d'utilisateur final.

7. Procédé selon la revendication 6, lesdites données de performance comprenant au moins l'une des informations de latence et des informations de débit de transfert.

8. Procédé selon la revendication 5, ladite identification des caractéristiques de réseau comprenant l'identification d'au moins l'un d'un fournisseur de services Internet de chacun desdits premier et second dispositifs d'utilisateur final et d'une plage d'adresses de réseau comprenant une adresse de réseau de chacun desdits premier et second dispositifs d'utilisateur final pour identifier les caractéristiques de réseau pour chacun des premier et second dispositifs d'utilisateur final.
